# EUROPÄISCHE PATENTANMELDUNG

(11) **EP 2 219 019 A2**
(43) Veröffentlichungstag der Anmeldung: **18.08.2010**
(21) Anmeldenummer: 10000271.6
(22) Anmeldetag: 13.01.2010
(51) Int. Cl.: G01M 19/00

(54) **Verfahren und Vorrichtung zum Prüfen der Auslegung eines eine Sitzfläche, eine Rückenlehne und eine Kopfstütze umfassenden Sitzes**

(30) Priorität: 11.02.2009 DE 102009008546
(71) Anmelder: Battenberg, Günther, 35037 Marburg (DE)
(72) Erfinder: Battenberg, Günther, 35037 Marburg (DE)
(74) Vertreter: Grünecker, Kinkeldey, Stockmair & Schwanhäusser Anwaltssozietät

(57) **Zusammenfassung**

Die vorliegende Erfindung betrifft ein Verfahren und eine Vorrichtung zum Prüfen der Auslegung eines eine Sitzfläche (2), eine Rückenlehne (3) und eine Kopfstütze (4) umfassenden Sitzes. Um das Prüfen effektiv und reproduzierbar durchzuführen werden erfindungsgemäß folgende Schritte durchgeführt: Positionieren eines Körpersimulationselementes mit einem Referenzmesspunkt auf dem Sitz mittels einer Roboterkinematik; Passivschalten der Roboterkinematik; Messen eines Abstandes zwischen dem Referenzmesspunkt und der Kopfstütze; und Vergleichen des gemessenen Abstandes mit einem Referenzwert

## Beschreibung

Die Erfindung betrifft ein Verfahren und eine Vorrichtung zum Prüfen der Auslegung eines eine Sitzfläche, eine Rückenlehne und eine Kopfstütze umfassenden Sitzes. An der im wesentlichen horizontal ausgerichteten Sitzfläche ist an der hinteren Kante eine sich im wesentlichen vertikal erstreckenden Rückenlehne fest oder um einen Winkelabschnitt verstellbar angeordnet. An der oberen Kante der Rückenlehne ist eine verstellbare Kopfstütze angeordnet deren Stangen in Kopfstützenaustrittsöffnungen in der Rückenlehne verschiebbar sind. Der Abstand der Kopfstütze zu dem oberen Rand der Rückenlehne ist veränderbar, damit die Kopfstütze auf die Größe des Passagiers einstellbar ist. Bei manchen Sitzmodellen ist die Neigung der Kopfstütze relativ zur Horizontalen durch eine Schwenkbewegung der Kopfstütze einstellbar, so dass der Abstand zwischen der Vorderseite der Kopfstütze und dem Hinterkopf des Passagiers einstellbar ist. Der lichte Abstand zwischen der Kopfstütze und dem Kopf des Passagiers wird auch Backset genannt und ist auch von der Auslegung des Sitzes abhängig. Da der Abstand zwischen dem Kopf und der Kopfstütze ein entscheidendes Kriterium im Hinblick auf die Unfallsicherheit ist, werden Sitze im Rahmen der Qualitätssicherung auf ihre Auslegung hin untersucht.

Es ist ein manuelles Verfahren für die Durchführung der Backset-Messung bekannt, bei dem eine Puppe, die den Passagier in Größe und Gewicht simulieren soll, unter bestimmten Maßgaben auf den zu prüfenden Sitz aufgesetzt wird. Diese Vorgehensweise ist kraft- und zeitaufwendig. Diese Puppe weist mittig in ihrem Kopf eine Probe auf, welche aus einer sich in Fahrtrichtung erstreckenden Schiene und einem an deren hinteren Ende angeordnetem Kugelsegment, das den Hinterkopf simulieren soll, besteht. Zum Messen des Backsets wird die Probe an die Kopfstütze angeschoben und die Distanz von einem Bediener von einem auf der Schiene befindlichen Lineal abgelesen. Die manuelle Backset-Messung wird nur stichprobenartig durchgeführt, wodurch die Auslegung des Sitzes unter Beachtung von Fertigungstoleranzen nur unzureichend durchgeführt werden kann. Neben der konstruktiven Auslegung beeinflussen nämlich auch Fertigungstoleranzen die endgültige Auslegung eines die Produktion verlassenden Sitzes.

Eine Aufgabe der Erfindung ist es, ein Verfahren zum Prüfen der Auslegung eines eine Sitzfläche, eine Rückenlehne und eine Kopfstütze umfassenden Sitzes anzugeben, das effektiv und reproduzierbar durchgeführt wird. Eine weitere Aufgabe der Erfindung ist es, eine Vorrichtung zum Durchführen eines solchen Verfahrens anzugeben.

Die Aufgabe wird erfindungsgemäß mit einem Verfahren nach Anspruch 1 gelöst. Das erfindungsgemäße Verfahren umfasst das Positionieren eines Körpersimulationselements mit einem Referenzmesspunkt auf dem zu prüfenden Sitz mittels einer Roboterkinematik; das Passivschalten der Roboterkinematik; das Messen eines Abstands zwischen dem Referenzmesspunkt und der Kopfstütze, und das Vergleichen des gemessenen Abstands mit einem Referenzwert.

Das Positionieren mittels der Roboterkinematik umfasst regelmäßig das Hinführen des Körpersimulationselements zu dem Sitz und das Aufsetzen auf den Sitz. Das Körpersimulationselement soll einen menschlichen Körper simulieren, der mit einem vorbestimmten Gewicht auf der Sitzfläche aufsitzt, sich mit einer vorbestimmten Kraft an die Rückenlehne anlehnt und in einer bestimmten Höhe den Kopf trägt.

Zu diesem Zweck kann das Körpersimulationselement mehrteilig aufgebaut sein, wobei der Teil, der auf der Sitzfläche zur Anlage kommt, zwei sich parallel zur Sitzlängsrichtung erstreckende Wölbungen aufweisen kann, um Oberschenkel zu simulieren, und der Teil, der an der Rückenlehne zur Anlage kommt, als breite und flache Platte ausgebildet sein kann, um einen Rücken zu simulieren, damit bei dem Prüfen der Auslegung des Sitzes das vorbestimmte Gewicht des Körpersimulationselements realitätsnah auf den Sitz einwirkt. Vorzugsweise sind der Teil, der auf der Sitzfläche aufliegt, und der Teil, der an der Rückenlehne anliegt, gelenkig miteinander verbunden, damit sie relativ zueinander verschwenkt werden können. Für die Prüfung der Auslegung des Sitzes wird regelmäßig eine Sitzposition mit einem bestimmten Lehnenwinkel zwischen der Sitzfläche und der Rückenlehne vorbestimmt. Nur wenn dieser Lehnenwinkel bzw. sein Toleranzbereich eingehalten wird, ist das Messergebnis aussagekräftig. Durch die gelenkige Anbindung der beiden Teile wird erreicht, dass beide Teile zueinander so weit auf oder zu schwenken können, dass sie einen Winkel einschließen, bei dem jedes Teil mit einer möglichst großen Auflagefläche mit der Sitzfläche bzw. der Rückenlehne in Kontakt ist, so dass eine entspanntes Anlehnen des Passagiers simuliert wird.

Von der Seite betrachtet verschwenkt der obere Teil des Körpersimulationselements um einen Hüftpunkt, der das Hüftgelenk des menschlichen Körpers simulieren soll. Vorzugsweise ist der Teil des Körpersimulationselements, der zur Anlage an die Rückenlehne kommt, mit Kraft beaufschlagt. Dadurch wird das Anlehnverhalten des Passagiers simuliert. Die gelenkige Anbindung des oberen Teils des Körpersimulationselements an das untere Teil ist bevorzugt so ausgebildet, dass in Richtung der Rückenlehne eine Verschwenkung möglich und kraftunterstützt ist, sie aber auch im Rahmen der Toleranzen der Rückenlehneneinstellung nachgebend ist. Die gelenkige Anbindung kann aus eine Kombination aus einem L-förmigen Hebel für das Verschwenken mit einem Pneumatikzylinder für die Kraftbeaufschlagung und Nachgiebigkeit bestehen.

Da bei diesem Aufbau der Kopf nicht zur Anlage an den Sitz kommt, sondern nur der Abstand zwischen dem Kopf und der Kopfstütze gemessen werden soll, kann bei dem Körpersimulationselement der Kopf reduziert werden auf einen Referenzmesspunkt. Der Referenzmesspunkt ist vorzugsweise so auf dem Körpersimulationselement angeordnet, dass sich seine Lage mit verändert, wenn sich beim Verstellen der Rückenlehne des Sitzes auch die Rückenplatte ihre Lage verändert. Somit kann mit ein und demselben Körpersimulationselement auch ein Sitz mit verstellbarer Rückenlehne auf seine Auslegung hin geprüft werden. Das Körpersimulationselement hat vorzugsweise eine im Vergleich zu einem Dummy kompakte Bauweise, so dass es sich von einem Roboterarm gut "handhaben" lässt. Bei dem Körpersimulationselement wird vorzugsweise auf die Nachbildung des Oberkörpers verzichtet. Lediglich die mit dem Sitz zusammenwirkenden Rückenflächen werden vorgesehen. Auch die unteren Beinextremitäten werden üblicherweise nicht ausgebildet.

Der Referenzmesspunkt bildet den ersten Messpunkt des zu messenden Abstandes und kann durch eine Anordnung wie bei der Triangulationsmessung durch Verwenden eine Referenzfläche ermittelt werden.

Der zweite Messpunkt bei der Abstandsmessung ist ein Punkt auf der Kopfstütze, der vorzugsweise auf derselben Höhe wie der Referenzmesspunkt liegt. Durch den elektronischen Vergleich des gemessenen Abstands mit einem Referenzwert wird ein geprüfter Sitz nach vorher festgelegten Kriterien für gut befunden oder aussortiert. Die Ergebnisse der Abstandsmessung können für eine spätere Untersuchung bzw. für das Qualitätsmanagement einfach gespeichert und weiterverarbeitet werden.

Eine Weiterbildung des Verfahrens sieht vor, von dem Körpersimulationselement der Roboterkinematik entgegen gesetzte Kräfte und Drehmomente zu messen, um das Positionieren des Körpersimulationselements in Abhängigkeit von diesen eingeleiteten Kräften und Drehmomenten zu steuern. Die Roboterkinematik trägt und führt das Körpersimulationselement. Bei dem Absetzen auf dem Sitz wird die Bewegung gegen den Widerstand des Sitzpolsters geführt, wodurch Kräfte und Drehmomente erzeugt werden, die gemessen werden. Durch schrittweises Absenken und Anheben oder auch Schwenken des Körpersimulationselements um eine oder mehrere Achsen kann die Position erfasst werden, in der die eingeleiteten Kräfte und Drehmomente minimal sind, und die der Position entspricht, in der das Körpersimulationselement weder durch den Roboter in das Sitzkissen gerückt wird, noch von ihm abgehoben wird, also nur das vorbestimmte Gewicht auf die Sitzfläche und Rückenlehne wirkt.

Eine Weiterbildung des erfindungsgemäßen Verfahrens sieht vor, dass in dem Positionierschritt auch eine Regelung einer Mittenfindung erfolgt, und zwar auf einer Achse, die sich in Querrichtung des Sitzes erstreckt. Zu diesem Zweck wird das Körpersimulationselement mittels der Roboterkinematik entlang der Querachse verfahren und werden die erfassten Kräfte und Drehmomente dahingehend ausgewertet, dass ein Anstieg der Kraft und/oder des Drehmoments das Erreichen einer seitlichen Endposition bedeutet. Denn die Kräfte und Momente steigen jedenfalls dann an, wenn das Körpersimulationselement seitliche, die eigentliche Sitzfläche überragende Wulste berührt und gegen diese gedrückt wird. Der Roboter wird von einem Computer auf einer Bahn gesteuert, wobei jeweils bei Erreichen einer seitlichen Endposition die dazugehörigen Koordinaten der Bahnkurve gemerkt werden, um anschließend den Punkt zu berechnen, der mittig dazwischen liegt und diesen anzufahren.

Eine Weiterbildung der Regelung der Mittenfindung umfasst die Schritte: Absetzen des Körpersimulationselementes auf der Sitzfläche durch den Roboter, bis die gemessenen Kräfte und Momente gegen Null tendieren; Robotergestütztes Verschieben des Körpersimulationselementes in Richtung der Rückenlehne bis eine vorbestimmte Anschlagskraft erreicht ist, wobei das Verschieben bezüglich der Querachse und der Höhe kraftfrei geregelt wird; Verfahren des Körpersimulationselementes nach vorne weg von der Rückenlehne und nach oben in die Höhe, so dass das Körpersimulationselement von der Sitzfläche abhebt; Verschieben des Körpersimulationselementes gegen einen ersten seitlichen Anschlag einer Sitzwulst der Sitzfläche und Merken dieser ersten seitlichen Endposition; Verschieben des Körpersimulationselementes gegen einen zweiten seitlichen Anschlag des Sitzwulstes und Merken dieser zweiten seitlichen Endposition; Verfahren des Roboters in die Mitte zwischen den beiden seitlichen Endpositionen; Absetzen des Körpersimulationselementes durch den Roboter, bis keine Kräfte und Momente mehr auf den Sensor wirken; Verschieben des Körpersimulationselementes durch den Roboter in Richtung der Rückenlehne mit einer zweiten vorbestimmten Anschlagkraft, und Erreichen einer Referenzposition durch erneutes Passivschalten der Roboterkinematik, bis keine Kräfte und Momente mehr wirken. Bei diesem Verfahren wird nicht nur simuliert, dass sich der Passagier mittig in dem Sitz ausrichtet, sondern auch, dass er sich in den Sitz fallen lässt und die Masse des Körpers multipliziert mit der Beschleunigung (dem Fallenlassen) eine Kraft ergibt, die auf die Polsterung der Sitzfläche und der Rückenlehne einwirkt und zu einer Verformung führt, die in der Ruheposition des Passagiers nicht vollständig durch die Rückstellkraft der Polsterung ausgeglichen wird.

Eine Weiterbildung des erfindungsgemäßen Verfahrens sieht den Schritt eines Einschaukelns um die sich in der Breite des Sitzes erstreckende Querachse durch Regeln der Neigung um einen von einem positiven Winkel bis zu einem negativen Winkel verlaufenden Winkelbereich zur Erfassung einer Neigungsposition mit minimalem Drehmoment vor. Das Neigen erfolgt dabei bevorzugt in einem Winkelbereich von +5° bis -5°.

Nach einer bevorzugten Ausführungsform sieht das Verfahren den Schritt des Messens der Neigung des Körpersimulationselements in dem Bereich, der den Rücken simuliert, vor, um einen für die Durchführung der Prüfung vorbestimmten Neigungswinkel zwischen der Rückenlehne des Sitzes und der Vertikalen zu verifizieren, damit der Winkel der Lehne nachjustiert werden kann und für die Qualitätskontrolle erforderliche Voraussetzungen geschaffen werden können. Im Sinne der Qualitätssicherung kann der bei der Abstandsmessung vorliegende Neigungswinkel zusammen mit anderen diesen Sitz betreffenden Daten wie Seriennummer des Sitzes, gemessener Abstand oder berechnete Mitte von dem Computer gespeichert werden. Um den Prüfvorgang weitestgehend zu automatisieren, kann das Nachjustieren von einem zusätzlichen Roboter durchgeführt werden.

Nach einer bevorzugten Weiterbildung erfolgt die Programmierung des Roboters für das Prüfen eines bestimmten Modells haptisch an diesem Modell, indem der Roboter mit dem Körpersimulationselement mit der Hand geführt wird und die dadurch geforderten Roboterbewegungen in einem entsprechenden Programm gespeichert werden. Somit können Prüfvorgänge für die unterschiedlichen Sitzmodelle schnell und effektiv programmiert werden.

Das erfindungsgemäße Verfahren eignet sich besonders für die Verwendung als Produktkontrolle bei der Serienfertigung der Sitze und kann an dem Förderband, auf dem die zusammenzubauenden Sitze transportiert werden, durchgeführt werden. Da das Verfahren schnell arbeitet, kann es für eine 100%-Produktkontrolle verwendet werden.

Die Aufgabe wird erfindungsgemäß ebenfalls gelöst durch eine Vorrichtung nach Anspruch 11 mit einem Körpersimulationselement mit einem vorbestimmten Gewicht und einem Referenzmesspunkt, einem der Kopfstütze zugeordneten Mittel zum Messen eines Abstandes zwischen dem Referenzmesspunkt und der Kopfstütze, und einem Roboter für das Positionieren des Körpersimulationselementes auf dem Sitz. Der Roboter ist vorzugsweise ein Knickarmroboter, der bei einem relativ geringen Bauraum einen relativ großen Aktionsradius hat. Das Positionieren mittels des Roboters erfolgt schnell auf einer vorprogrammierten Bahn. Der zu messende Abstand liegt zwischen dem Referenzmesspunkt auf dem Körpersimulationselement und einem Punkt auf der Kopfstütze, vorzugsweise ein Punkt mit annähernd derselben Höhe wie der Referenzmesspunkt. Die Vorrichtung kann auch so eingerichtet sein, dass der kürzeste Abstand zwischen dem Referenzmesspunkt und dem Messpunkt auf der Kopfstütze ermittelt wird.

Das Mittel zum Messen eines Abstandes kann ein Abstandssensor sein, wobei die Optik des Abstandssensors dem Referenzmesspunkt entsprechen kann. Das Mittel zum Abstandmessen ist vorzugsweise ein Triangulationssensor, der auch auf die relative geringe zu messende Entfernung (< 10 cm) Messergebnisse mit geringen Toleranzen liefert.

Die Vorrichtung weist in einer Weiterbildung einen Sensor zur Bereitstellung von Messwerten von Kräften (Fx, Fy, Fz) entlang von Achsen eines dreidimensionalen kartesischen Koordinatensystems und von Momenten (Mx, My, Mz) um die Achsen des dreidimensionalen kartesischen Koordinatensystems auf. Diese Messwerte werden von dem Computer verwendet, um die Bahn des Roboters kraft- und momentenabhängig zu regeln. Vorzugsweise ist der Sensor zwischen der Roboterkinematik und dem Körpersimulationselement angeordnet, um die eingeleiteten Kräfte und Drehmomente unmittelbar aufzunehmen. Der Sensor kann ein dreiachsiger Kraft-Momenten-Sensor sein, dessen Messwerte an den den Roboterarm führenden Computer rückgekoppelt werden, der daraufhin in Echtzeit die Bahn für den Roboterarm optimieren kann.

Die Vorrichtung umfasst vorzugsweise einen Neigungssensor für die Verifikation des vorbestimmten Neigungswinkels der Rückenlehne zur Vertikalen. Die Abstandsmessung führt nur zu einem aussagekräftigen Ergebnis, wenn sie bei einem bestimmten Lehnenwinkel durchgeführt wird. Zu diesem Zweck wird der zu prüfende Sitz vor der Belastung auf einen bestimmten Lehnenwinkel eingestellt, der beispielsweise durch ein bildgebendes Verfahren kontrolliert werden kann. Unter der Belastung durch das Körpersimulationselement kann sich der Lehnenwinkel so weit verändert haben, dass er außerhalb der Toleranzen liegt. Einem unter diesen Umständen geprüften Sitz könnte ein falsches positives Ergebnis zugeteilt werden, d. h., er könnte für gut befunden und an den Kunden ausgeliefert werden, obwohl er, wenn er richtlinienkonform gemessen worden wäre, aussortiert worden wäre. Dieser Fehler kann ausgeschlossen werden, wenn die Abstandsmessung nur dann erfolgt, wenn der Neigungssensor, der der auf die Rückenlehne einwirkenden Rückenplatte zugeordnet ist, bestätigt, dass der Neigungswinkel der Rückenlehne auch unter Belastung im vorgegebenen Bereich liegt.

Nach einer bevorzugten Ausführungsform weist die Vorrichtung ein Transportband auf, auf dem der Sitz während der Prüfung montiert ist, und vorzugsweise zusammengebaut wurde. Dann ist weder ein Umsetzen, noch ein Zwischenlagern des Sitzes erforderlich. Die Qualitätskontrolle kann im Sinne einer End-Of-Line-Prüfung bei der Fertigung durchgeführt werden und als Ergebnis zu einer Freigabe oder einem Ausschluss gelangen.

Vorzugsweise ist das der Kopfstütze zugeordnete Mittel zum Messen eines Abstandes auf dem Körpersimulationselement montiert, so dass es selber den Referenzmesspunkt darstellt.

Nach einer Ausführungsform weist die Vorrichtung einen zusätzlichen Roboter für eine Sitzverstellung auf, so dass das erfindungsgemäße Verfahren die Auslegung des Sitzes für unterschiedliche Sitzpositionen schnell durchführen kann.

Die erfindungsgemäße Vorrichtung hat üblicherweise eine zentrale Steuerung mit einem leistungsfähigen Rechner, der abzuarbeitende Prüfwege und Sollwerte an vorbestimmten Referenzpositionen erfasst und abspeichert. Für unterschiedliche Sitze können unterschiedliche Vorgaben hinterlegt sein. Die Steuerung kommuniziert üblicherweise mit den Ausgangsgrößen des Sensors, um beispielsweise auch eine haptische Programmierung zu erlauben. Diese haptische Programmierung ist beispielsweise in EP 1 922 596 A1 beschrieben und ermöglicht das manuelle Führen der Roboterbewegung in einem Programmiermode, in welcher die Signale des Sensors, die eine manuelle Betätigungskraft erfassen, welche an der dem Roboter abgewandten Seite des Sensors wirkt, verarbeitet werden, um die Roboterbewegung zu steuern. Der Roboterarm "folgt" danach der manuellen Bedienkraft eines Benutzers.

Die vorliegende Erfindung wird nachfolgend anhand eines Ausführungsbeispiels in Verbindung mit der Zeichnung erläutert. In dieser zeigen
- Fig. 1: eine perspektivische Draufsicht auf das Ausführungsbeispiel;
- Fig. 2: eine perspektivische Draufsicht auf ein Ausführungsbeispiel;
- Fig. 3: eine perspektivische Seitenansicht eines Details des Ausführungsbeispiels eines Körpersimulationselementes;
- Fig. 4: als Detail einen Kraft-Moment-Sensor;
- Fig. 5: den ersten Schritt einer Referenzfindung;
- Fig. 6: das geregelte Absetzen einer Schale auf dem Sitz;
- Fig. 7: das Verschieben der Schale in Richtung einer Rückenlehne;
- Fig. 8: ein Schweben der Schale;
- Fig. 9: das Ermitteln einer rechten Endposition der Schale;
- Fig. 10: das Ermitteln einer linken Endposition der Schale;
- Fig. 11: die Mittenfindung;
- Fig. 12: ein geregeltes Absetzen der Schale;
- Fig. 13: das Verschieben der Schale in die Rückenlehne mit einer vordefinierten An- schlagskraft; und
- Fig. 14: die angestrebte Referenzposition des Körpersimulationselementes.

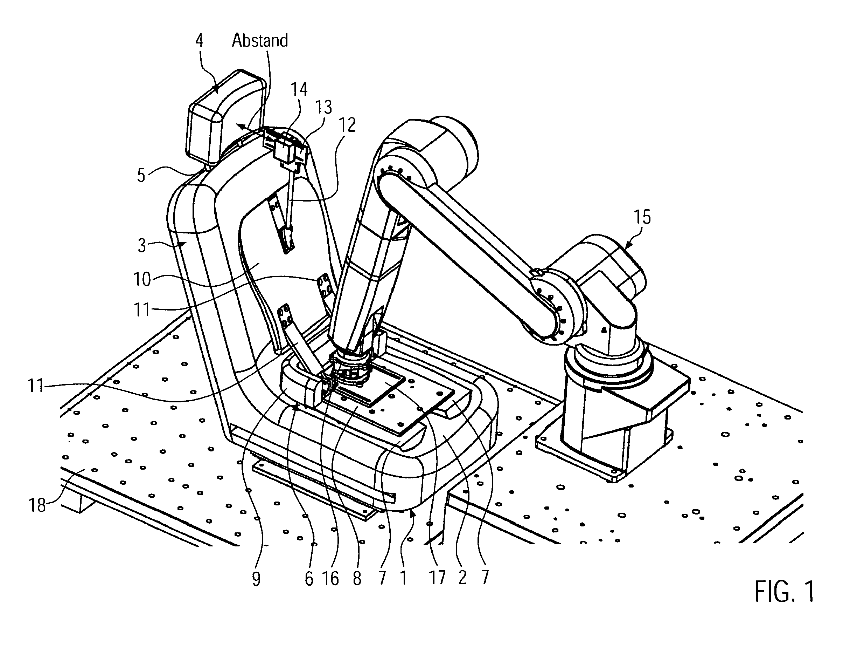

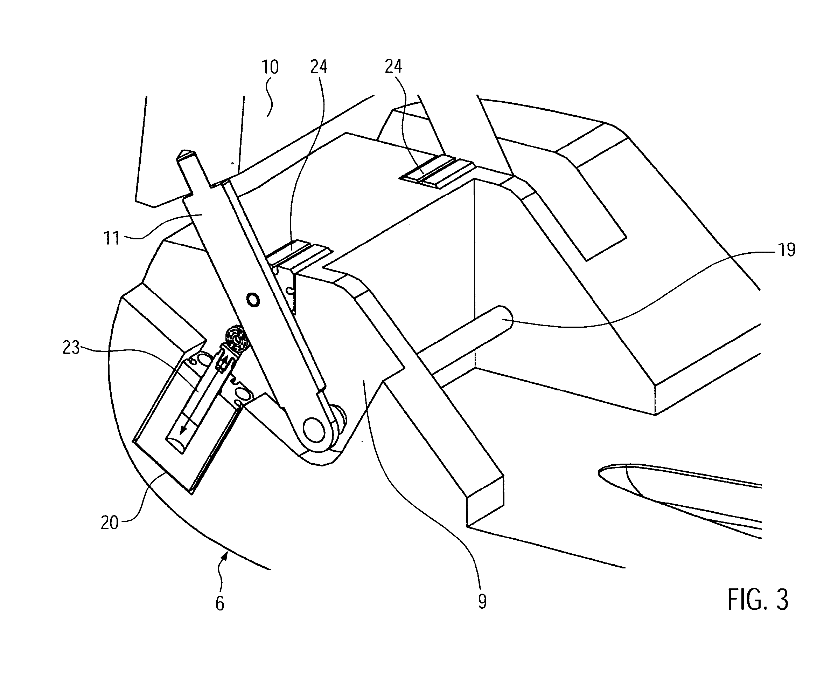

Fig. 1 zeigt eine perspektivische Draufsicht auf eine erfindungsgemäße Vorrichtung zum Prüfen der Auslegung eines Sitzes 1, der eine Sitzfläche 2, eine Rückenlehne 3 und eine Kopfstütze 4, die über Stangen 5 mit der Rücklehne 3 verbunden ist, umfasst. Ein Körpersimulationselement umfasst dabei eine Prüfschale 6, die auf die Sitzfläche 2 aufgesetzt wird und zwei halbröhrenförmige Abschnitte 7 aufweist, die die Oberschenkel eines Passagiers darstellen sollen. Die Wölbungen der halbröhrenförmigen Abschnitte 7 werden durch das Gewicht der Prüfschale 6 ein Stück weit in die Sitzfläche 2 reingedrückt. Auf der abgeflachten Seite der Abschnitte 7 liegt eine Platte 8 für das Eintarieren eines vorbestimmten Gewichts auf. Die Prüfschale weist zumindest im rückwärtigen Bereich einen Rand 9 für die Aufnahme einer sich quer zu dem Sitz erstreckenden Achse auf. Das Körpersimulationselement umfasst weiterhin eine Rückenplatte 10, die über zwei auf der Achse gelagerte Schwenkhebel 11 mit der Prüfschale 6 verbunden ist und während des Prüfvorgangs zur Anlage an die Rückenlehne 3 gelangt. An der Rückenplatte 10 ist ein Verlängerungsarm 12 angeordnet. An dessen freiem Ende ist eine Montagevorrichtung 13 für eine Vorrichtung 14 zum Messen eines Abstandes angeordnet. Diese Vorrichtung kann ein Abstandssensor sein. Der Abstandssensor 14 ist mit seiner Optik auf die Kopfstütze 4 ausgerichtet und ist so angeordnet, dass er den Abstand zu der Kopfstütze 4 misst, beispielsweise mit einem optischen Messverfahren wie der Triangulation. Der Abstandssensor 14 stellt in diesem Fall selber den Referenzmesspunkt dar, wobei ein in Verbindung mit Fig. 3 näher beschriebenes Zentrum (H-Punkt) einer Achse 19 einen Lagebezugspunkt für den Abstandsvektor ausbildet. Zur Ansteuerung des Sensors und zur Übermittlung der Messergebnisse ist der Abstandssensor 14 mit einem Computer verbunden.

Die Prüfschale 6 kann automatisiert der Prüfung zugeführt werden. Üblicherweise befindet sich der zu prüfende Sitz auf einem Transportband, welches Teil der Bewegungsbahn des Sitzes in der Fertigung sein kann. Alternativ kann auch ein zweiter Roboter vorgesehen sein, welcher den zu prüfenden Sitz an den Prüfstand anordnet. Ein zweiter Roboter ist üblicherweise jedenfalls vorgesehen, um die Sitzposition der Rückenlehne einzustellen. Speziell wird mit dem zweiten Roboter eine Lage der Rückenlehne mit einem Neigungswinkel bezogen auf die durch die Rückenlehne gebildete Anlagefläche von 25° ± 2° gegenüber der Vertikalen eingestellt. Die Rückenlehne ist dabei in üblicher Gebrauchsposition, d.h. leicht nach hinten geneigt ausgerichtet. Das Einstellen dieser Winkellage der Rückenlehne erfolgt üblicherweise mit dem zweiten Roboter. Dabei wird die Winkellage der Rückenlehne automatisiert durch einen Sensor, beispielsweise ein bildgebendes und die Rückenlehne erfassendes System erfasst, welcher mit dem Roboter kommuniziert, um die Winkellage der Rückenlehne in dem obigen Intervall exakt einzustellen.

Ein Roboter 15 weist am Ende seines Betätigungsarms einen Kraft-Drehmoment-Sensor 16 auf, der mit einer Auflage 17 auf der Prüfschale verbunden ist. Der Sitz 1 wird auf einem Transportband oder einer Plattform 18 bereitgestellt. Die Prüfschale soll zusammen mit der Rückenplatte und dem Abstandssensor einen Passagier simulieren und hat daher bevorzugt ein vorbestimmtes Gewicht und an der Unterseite annähernd die Abbildung von Oberschenkeln. Der formgebende Körper der Prüfschale kann dabei aus einem Kunststoff bestehen, der relativ leicht ist. Das originale Gewicht kann dabei durch eine integrierte Platte aus einem Material mit einem relativ hohen Gewicht, bspw. Eisen, entstehen.

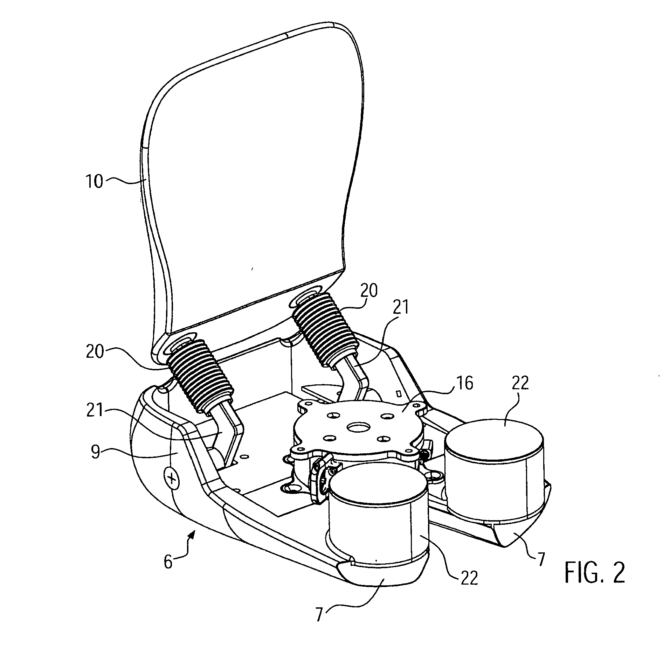

Figur 2 zeigt eine perspektivische Draufsicht auf ein Ausführungsbeispiel des körperlichen Simulationselementes mit einer Prüfschale 6 und einer Rückenplatte 10, die gelenkig und verstellbar an der Prüfschale 6 angeordnet ist. Die Prüfschale 6 hat auf den die Oberschenkelstümpfe simulierenden halbröhrenförmigen Abschnitten 7 jeweils dosenförmige Aufnahmen für Simulationsgewichte 22, wobei die Grenzflächen der Prüfschale 6 zu dem Sitz eine dem menschlichen Körper nachempfundene Oberflächenkontur hat. Diese Simulationsgewichte 22 sind in Form von Scheiben ausgebildet, wobei die Höhe der aufgelegten Scheiben zur Veränderung des simulierten Gewichtes verändert werden können. Mittig in der Prüfschale erhebt sich ein Topf zur Aufnahme eines drei-Achsen-Sensors 13, an dessen oberer Abdeckung der Roboterarm festgeschraubt werden kann.

Die Rückenplatte ist als Torsoschale ausgebildet, d.h. hat eine räumliche Erstreckung entsprechend dem Torso eines Menschen. Die obere Begrenzung entspricht der Schulterlinie. Die Rückenplatte 10 ist gelenkig mit der Prüfschale 6 verbunden. Zwischen der Prüfschale 6 und der Rückenplatte 10 befinden sich translatorische Stellelemente 20 in Form von Pneumatikzylinder, die an einem L-förmigen Schwenkhebel 21 gegenüber der Prüfschale 6 abgestützt sind. Die beiden Schwenkhebel 21 sind gelenkig an der Prüfschale 6 montiert. Die Schwenkachse der L-förmigen Schwenkheben 21 entspricht der Hüftachse, d.h. der sich quer zur Körperlängsachse erstreckenden Drehachse des Hüftgelenkes. Diese ist in Figur 3 mit Bezugszeichen 19 gekennzeichnet.

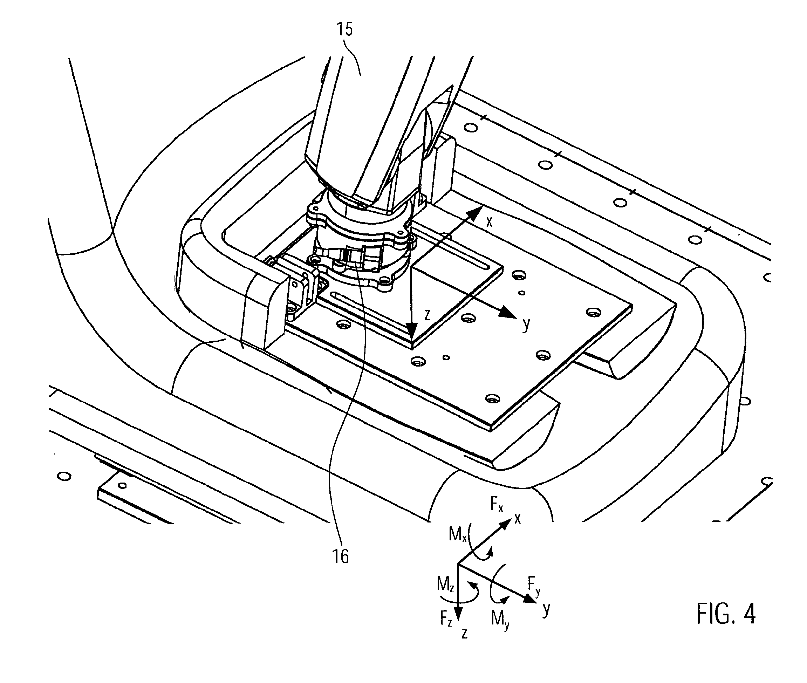

In Figur 4 ist die aufgeklappte Position der Rückenplatte 10 gezeigt, die so vorgestellt ist, das die Rückenplatte 10 eine vorbestimmte Lage einnimmt. Diese Lage kann durch Anschläge oder dergleichen vorbestimmt sein. Jedenfalls befindet sich innerhalb der Rückenplatte 10 ein Inklinometer, der den tatsächlichen Neigungswinkel der Rückenplatte 10 bestimmt. Die Voreinstellung der Rückenplatte 10 folgt mit einem Neigungswinkel von 25° relativ zu der Senkrechten (bezogen auf die durch die Rückenplatte 10 gebildete Anlagefläche).

In Figur 2 ist nicht der zur Abstandsmessung vorgesehene Verlängerungsarm dargestellt, der jedoch ebenfalls vorgesehen und wie in Figur 1 dargestellt ausgebildet sein kann. In der Rückenplatte ist des Weiteren ein Triangulationssensor vorgesehen, der zur Abstandsmessung eingesetzt wird. Dabei berechnet der Triangulationssensor aufgrund gemessener Neigungswinkel und mit den bekannten Hebelarmen zum Referenzpunkt den Abstand des Referenzpunktes von der Oberfläche der Kopfstütze.

Figur 3 zeigt einen Mechanismus zum Bewegen der Rückenplatte 10, die um eine Achse 19 schwenkbar angeordnet ist. Zu diesem Zweck verbinden zwei Schwenkhebel 11 die Rückenplatte 10 mit der in Sitz-Querrichtung (X-Richtung) an der Prüfschale an dem Rand 9 gelagerten Achse 19. Das Zentrum der Achse 19 bildet einen H-Punkt in der Messanordnung und soll die Hüfte des Passagiers simulieren. An der Prüfschale 6 ist mindestens ein translatorisches Stellelement 20 angeordnet. Das Stellelement 20 weist beispielsweise einen Stößel 22 auf, der auf mindestens einen der Verschwenkhebel 11 mittelbar oder unmittelbar verschwenkend einwirkt. Das Betätigungselement fährt dabei nach vorne und oben aus. Die Prüfschale weist mindestens eine Verriegelung 23 auf, die parallel zu der Schwenkachse 19 verschoben werden kann. In dem zurückgezogenen Zustand gibt die Verriegelung 23 den Schwenkbereich der Schwenkhebel 11 frei. In dem ausgefahrenen (nicht dargestellten) Zustand blockiert die Verriegelung 23 den Schwenkhebel 11.

Figur 4 zeigt als Detail der Anordnung den Kraft-Moment-Sensor 16, der als Messwerte die Kräfte Fx, Fy, Fz entlang der drei Achsen (X, Y, Z) und die Momente Mx, My, Mz um die drei Achsen (X, Y, Z) liefert. Mit Hilfe des Kraft-Moment-Sensors führt der Roboter 15 kraft/momentgeregelte Bewegungen zur Referenzfindung aus.

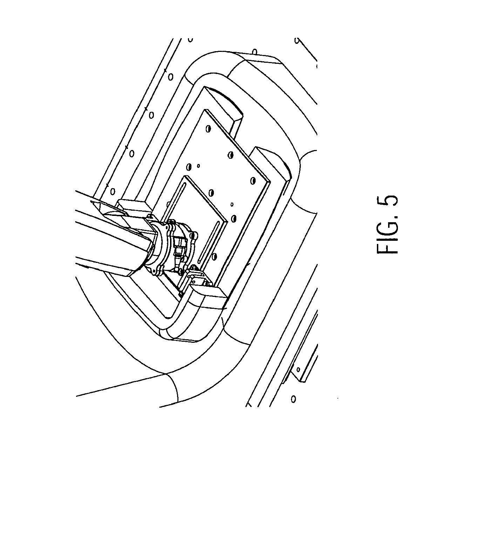

Figur 5 zeigt den ersten Schritt der Referenzfindung bei dem der Roboter 15 mit der über den Kraft-Moment-Sensor 16 und die Auflage 17 verbundenen Prüfschale 6 in eine Ausgangsstellung fährt, die etwas oberhalb des Sitzes 1 liegt. Die Prüfschale 6 hängt dabei mit ihrem Gewicht an dem Roboterarm bzw. Sensor 16.

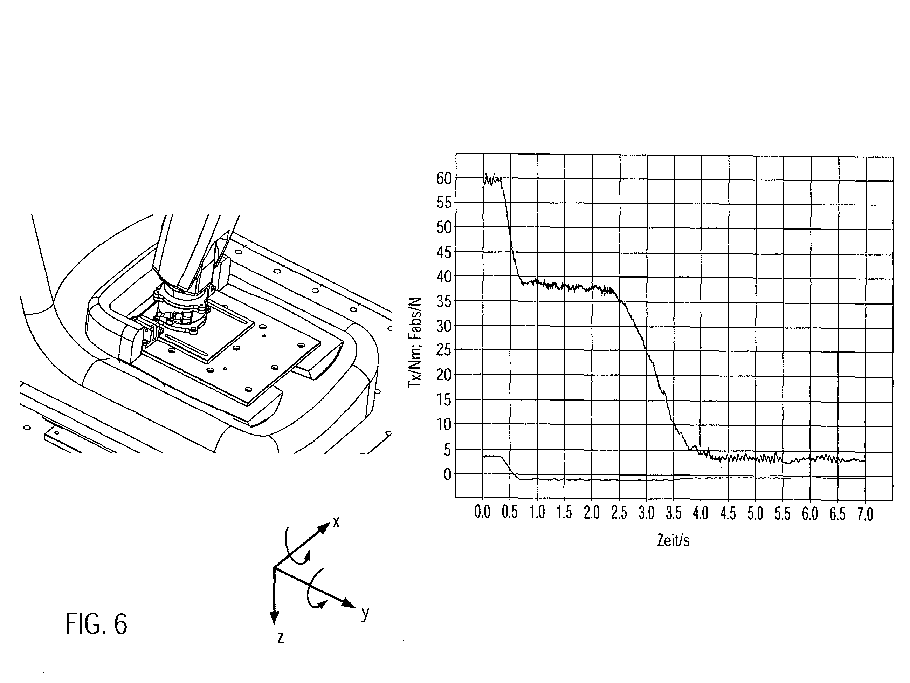

Die Figuren 6 bis 14 zeigen verschiedene Phasen zum Einrichten des Körpersimulationselementes unter Berücksichtigung der gemessenen Kräfte und Momente. Die Position des Roboterarms mit dem Körpersimulationselement relativ zu dem Sitz ist jeweils links dargestellt. Der Kräfte-Momentenverlauf in der jeweiligen Phase ist in dem rechten Diagramm dargestellt. Die Bewegungen des Körpersimulationselementes relativ zu dem Sitz ergeben sich auch aus dem ebenfalls in den Figuren gezeigten kartesischen Koordinatensystem.

Figur 6 zeigt Schritt 2 des erfindungsgemäßen Verfahrens. Der Roboter 15 setzt die Schale 6 geregelt auf dem Sitz 1 ab, bis die gemessenen Kräfte und Momente gegen Null tendieren wie aus dem Zeit-Drehmoment/Kraft-Diagramm ersichtlich.

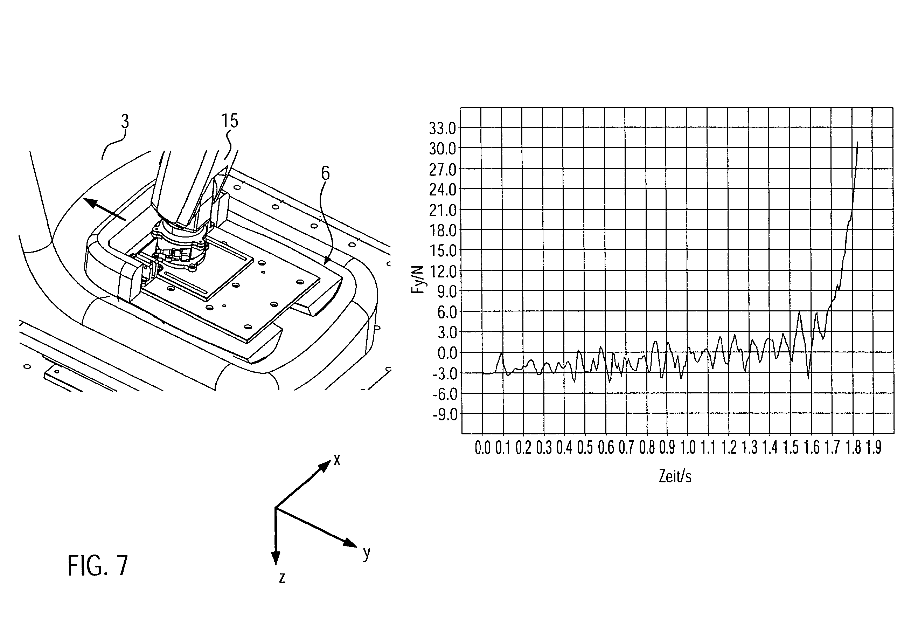

Figur 7 zeigt Schritt 3 des erfindungsgemäßen Verfahrens. Der Roboter 15 schiebt die Schale 6 in Richtung der Rückenlehne 3 (negative Y-Richtung), wobei die X- und die Z-Richtung kraftfrei geregelt werden, bis eine definierte Anschlagskraft in der negativen Y-Richtung erreicht ist, die in dem Zeit-Kraft-Diagramm als zum Ende hin stark steigende Kurve Fy dargestelt ist.

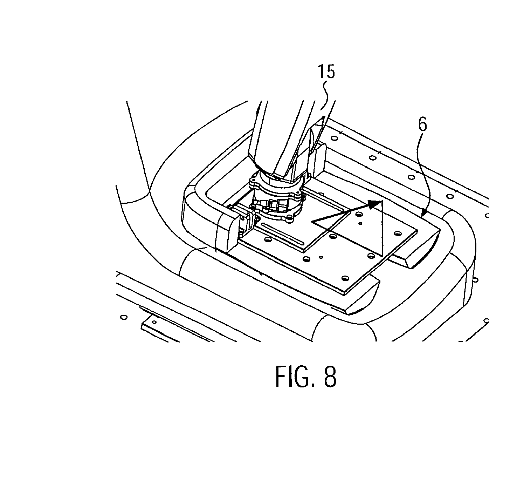

Figur 8 zeigt Schritt 4 des erfindungsgemäßen Verfahrens. Der Roboter 15 fährt etwas zurück (positive Y-Richtung) und hoch (negative Z-Richtung), so dass die Schale 6 in Luft schwebt.

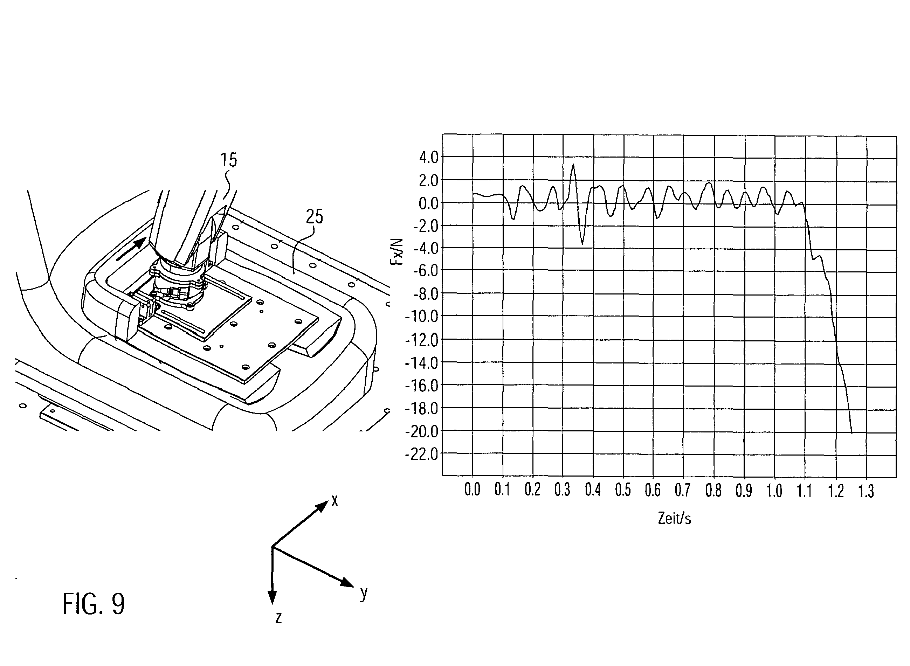

Figur 9 zeigt Schritt 5 des erfindungsgemäßen Verfahrens. Der Roboter 15 schiebt die Schale 6 gegen einen rechten (positive X-Richtung) Anschlag eines Sitzwulstes 25, mit einer vordefinierten Anschlagskraft in positiver X-Richtung. Die Koordinaten, die diese Endposition beschreiben, werden von der computergestützten Steuerung des Roboters als rechte Endposition Pr gemerkt.

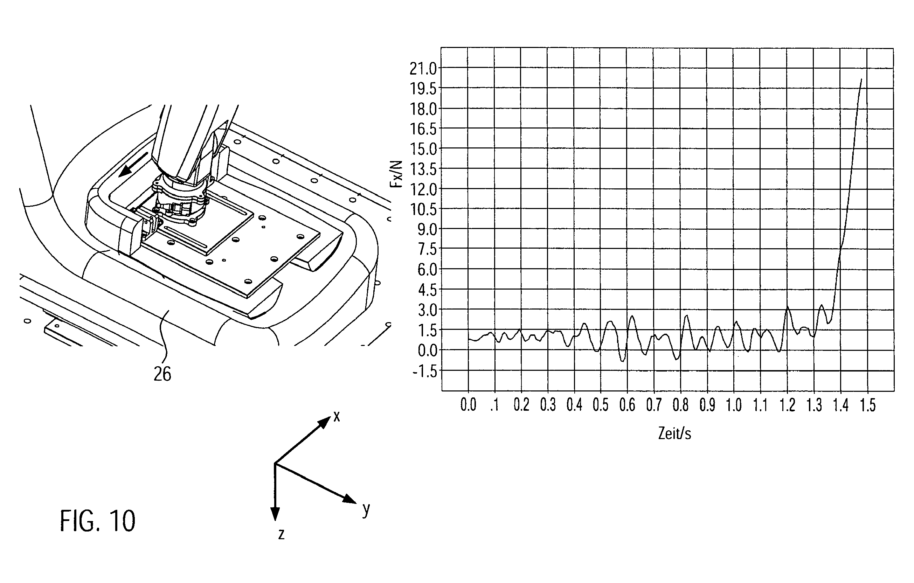

Figur 10 zeigt Schritt 6 des erfindungsgemäßen Verfahrens. Der Roboter 15 schiebt die Schale 6 gegen einen linken (negative X-Richtung) Anschlag eines Sitzwulstes 26, mit einer vordefinierten Anschlagskraft. Die Koordinaten werden von der computergestützten Steuerung des Roboters als linke Endposition Pl gemerkt.

Die in den Schritten 5 und 6 berechneten Kraftverläufe werden zur Mittenfindung umgerechnet.

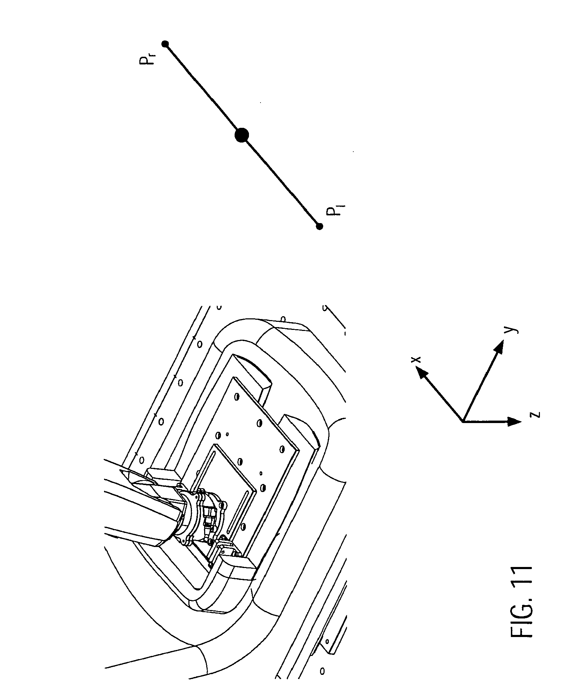

Figur 11 zeigt Schritt 7 des erfindungsgemäßen Verfahrens. Der Computer berechnet auf Basis der in den beiden vorangehenden Schritten gemerkten linken und rechten Endposition die rechnerische Mitte. Der Roboter 15 fährt in diese berechnete Mitte.

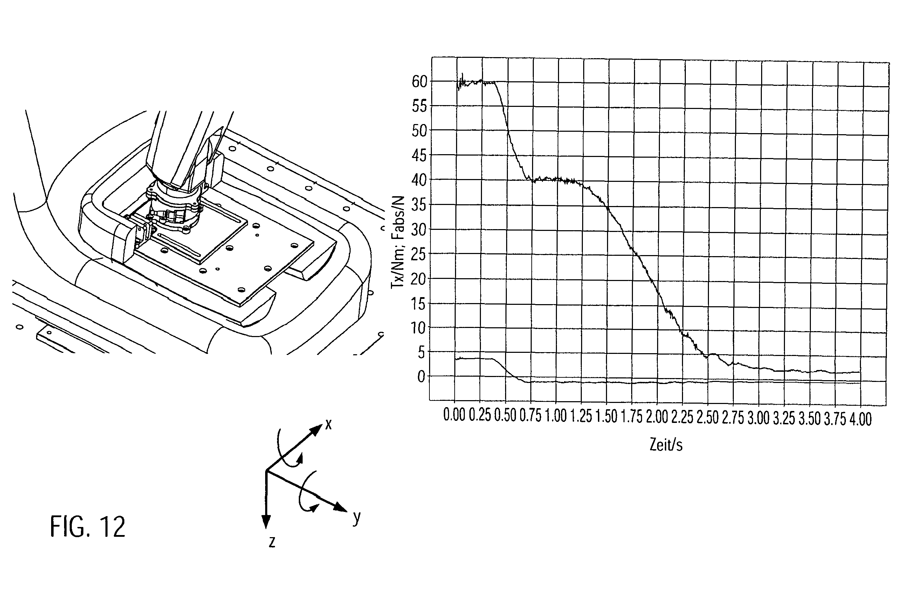

Figur 12 zeigt Schritt 8 des erfindungsgemäßen Verfahrens. Der Roboter 15 setzt die Schale 6 erneut geregelt ab, bis die gemessenen Kräfte und Momente gegen Null tendieren, wie aus dem Zeit- Momenten/Kraft-Diagramm ersichtlich (wie Schritt 2).

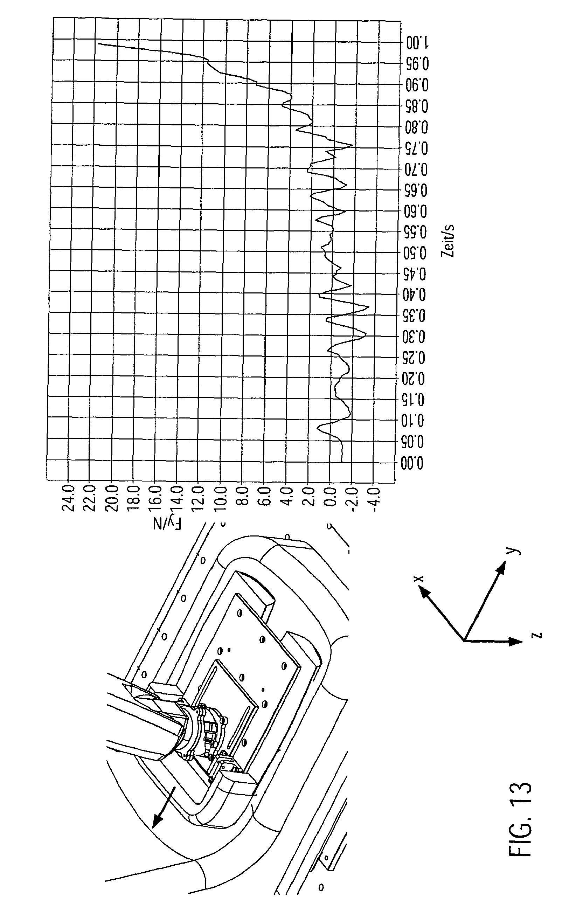

Figur 13 zeigt Schritt 9 des erfindungsgemäßen Verfahrens. Der Roboter 15 schiebt die Schale 6 erneut nach hinten (negative Y-Richtung), wobei die X- und Z-Richtung kraftfrei geregelt werden (wie Schritt 3), bis eine vordefinierte Anschlagskraft in negativer Y-Richtung erreicht ist, dargestellt durch den ansteigenden Kurvenverlauf im Zeit-Kraft-Diagramm.

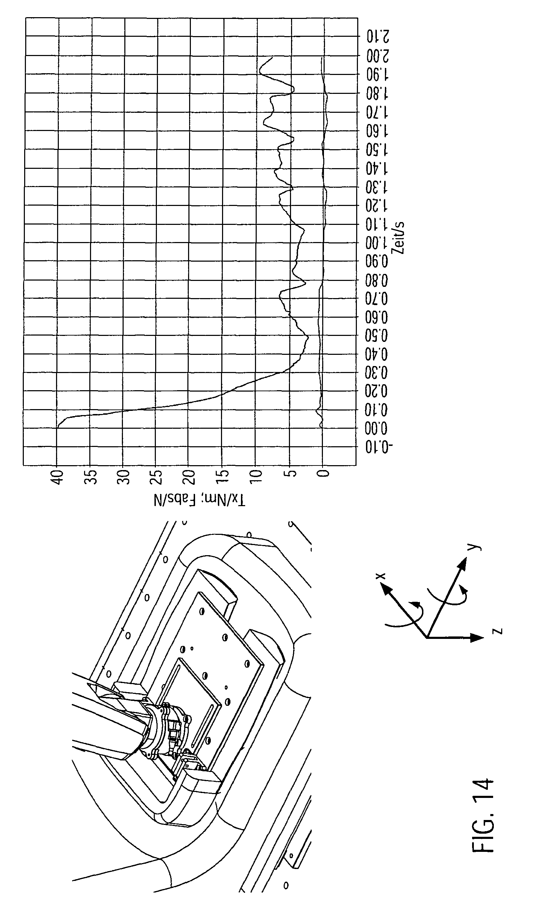

Figur 14 zeigt Schritt 10 des erfindungsgemäßen Verfahrens. Der Roboter 15 entspannt die Schale 6 erneut, bis keine Kräfte und Momente mehr wirken (wie Schritt 2). Die Schale 6 befindet sich in der angestrebten Endposition. Diese von dem Roboter ermittelte Endposition unter Berücksichtigung der tatsächlich wirkenden Kräfte entspricht derjenigen Position, die nach der Anschauung ein Benutzer des Sitzes zwanglos einnehmen würde. Bei dem zuvor beschriebenen Verfahren wird damit eine Messposition eingestellt, die sich an den tatsächlichen Gegebenheiten des hergestellten Sitzes orientiert. Das Körpersimulationselement "fühlt sich" mithilfe des Roboters und den Kraft- bzw. Momentenmessungen in diejenige Sitzposition ein, von der erwartet werden kann, dass sie auch der Benutzer einnimmt. In der so eingestellten Endposition erfolgt die Abstandsmessung. Danach erfolgt die Abstandmessung unter Berücksichtigung der tatsächlichen Gegebenheiten. Entgegen dem vorbekannten Stand der Technik, bei dem ein Dummy händisch auf dem Sitz positioniert wurde, werden mit dem vorgeschriebenen Messverfahren Artefakte ausgeschlossen, die durch das Einbringen des Messpunktes (Kopf des Dummys) eingebracht werden können. Die Positionsfindung allein auf der Wechselwirkung zwischen dem Polstermaterial des zu vermessenden Sitzes und dem Körpersimulationselement, wobei der Roboter aufgrund der Kräfte- und Momentenmessung eine gegebenenfalls für jeden Sitz individuelle, aufgrund des Sitzverhaltens aber reproduzierbare Messposition einstellt.

### Bezugszeichenliste

- 1: Sitz
- 2: Sitzfläche
- 3: Rückenlehne
- 4: Kopfstütze
- 5: Stangen
- 6: Prüfschale
- 7: halbröhrenförmige Abschnitte
- 8: Gewichtsplatte
- 9: Rand
- 10: Rückenplatte
- 11: Befestigungselement
- 12: Verlängerungsarm
- 13: Montagevorrichtung
- 14: Vorrichtung zum Messen eines Abstandes
- 15: Roboter
- 16: Kraft-Drehmoment-Sensor
- 17: Auflage
- 18: Plattform
- 19: Achse in Querrichtung des Sitzes
- 20: translatorisches Stellelement
- 21: Schwenkhebel
- 22: Simulationsgewicht
- 23: Stößel
- 24: Verriegelung
- 25: Anschlag rechter Sitzwulst
- 26: Anschlag linker Sitzwulst

## Patentansprüche

1. Verfahren zum Prüfen der Auslegung eines eine Sitzfläche (2), eine Rückenlehne (3) und eine Kopfstütze (4) umfassenden Sitzes (1), mit den Schritten:
- Positionieren eines Körpersimulationselements mit einem Referenzmesspunkt auf dem Sitz mittels einer Roboterkinematik;
- Passivschalten der Roboterkinematik;
- Messen eines Abstandes zwischen dem Referenzmesspunkt und der Kopfstütze (4); und
- Vergleichen des gemessenen Abstands mit einem Referenzwert.

2. Verfahren nach Anspruch 1, **gekennzeichnet durch** den Schritt des Messens der von dem Körpersimulationselement der Roboterkinematik entgegen gesetzten Kräfte und Drehmomente, um das Positionieren des Körpersimulationselements in Abhängigkeit von den eingeleiteten Kräften und Drehmomenten zu steuern.

3. Verfahren nach Anspruch 1 oder 2, **dadurch gekennzeichnet, dass** der Positionierschritt den Schritt der Regelung einer Mittenfindung auf einer Achse, die sich in Querrichtung des Sitzes erstreckt, durch Verfahren des Körpersimulationselementes entlang der Querachse und Erkennen der seitlichen Endpositionen unter Verwendung der gemessenen Kräfte umfasst.

4. Verfahren nach einem der vorherigen Ansprüche, **dadurch gekennzeichnet, dass** die Regelung der Mittenfindung folgende Schritte umfasst:
Absetzen des Körpersimulationselementes auf der Sitzfläche (2) durch den Roboter (15), bis die gemessenen Kräfte und Momente gegen Null tendieren;
Robotergestütztes Verschieben des Körpersimulationselementes in Richtung der Rückenlehne (3) bis eine vorbestimmte Anschlagskraft erreicht ist, wobei das Verschieben bezüglich der Querachse und der Höhe kraftfrei geregelt wird;
Verfahren des Körpersimulationselementes nach vorne weg von der Rückenlehne und nach oben in die Höhe, so dass das Körpersimulationselement von der Sitzfläche abhebt;
Verschieben des Körpersimulationselementes gegen einen ersten seitlichen Anschlag einer Sitzwulst der Sitzfläche und Merken dieser ersten seitlichen Endposition (Pl);
Verschieben des Körpersimulationselementes gegen einen zweiten seitlichen Anschlag des Sitzwulstes und Merken dieser zweiten seitlichen Endposition (Pr);
Verfahren des Roboters (15) in die Mitte zwischen den beiden seitlichen Endpositionen (Pl, Pr);
Absetzen des Körpersimulationselementes durch den Roboter (15), bis keine Kräfte und Momente mehr auf den Sensor wirken;
Verschieben des Körpersimulationselementes durch den Roboter (15) in Richtung der Rückenlehne mit einer zweiten vorbestimmten Anschlagkraft, und
Erreichen einer Referenzposition durch erneutes Passivschalten der Roboterkinematik, bis keine Kräfte und Momente mehr wirken.

5. Verfahren nach einem der vorherigen Ansprüche, **gekennzeichnet, durch** den Schritt eines Einschaukelns um die sich in der Breite des Sitzes erstreckende Querachse **durch** Regeln der Neigung um einen von einem positiven Winkel bis zu einem negativen Winkel verlaufenden Winkelbereich zur Erfassung einer Neigungsposition mit minimalem Drehmoment.

6. Verfahren nach einem der vorangehenden Ansprüche, **gekennzeichnet durch** den Schritt des Messens der Neigung des Körpersimulationselements in dem Bereich, der den Rücken simuliert, um einen für die Durchführung der Prüfung vorbestimmten Neigungswinkel zwischen der Rückenlehne und der Vertikalen zu verifizieren.

7. Verfahren nach Anspruch 6, **gekennzeichnet durch** den Schritt des automatischen Nachjustierens des Neigungswinkels der Rückenlehne (3).

8. Verfahren nach einem der vorangehenden Ansprüche, **dadurch gekennzeichnet, dass** die Programmierung des Roboters für das Prüfen eine bestimmten Modells eines Sitzes erfolgt, indem der Roboter mit dem Körpersimulationselement mit der Hand geführt wird und die **dadurch** geforderten Roboterbewegungen in einem entsprechenden Programm gespeichert werden.

9. Vorrichtung zum Prüfen der Auslegung eines eine Sitzfläche (2), eine Rückenlehne (3) und eine Kopfstütze (4) umfassenden Sitzes (1) mit
einem Körpersimulationselement mit einem vorbestimmten Gewicht und einem Referenzmesspunkt,
einem der Kopfstütze (4) zugeordneten Mittel zum Messen eines Abstandes zwischen dem Referenzmesspunkt und der Kopfstütze, und
einem Roboter für das Positionieren des Körpersimulationselementes auf dem Sitz.

10. Vorrichtung nach Anspruch 9, **gekennzeichnet durch** einen zwischen der Roboterkinematik und dem Körpersimulationselement angeordneten Sensor zur Bereitstellung von Messwerten von Kräften (Fx, Fy, Fz) entlang von Achsen eines dreidimensionalen kartesischen Koordinatensystems und von Momenten (Mx, My, Mz) um die Achsen des dreidimensionalen kartesischen Koordinatensystems.

11. Vorrichtung nach Anspruch 9 oder 10, **gekennzeichnet durch** einen Neigungssensor für die Verifikation eines vorbestimmten Neigungswinkels der Rückenlehne (3).

12. Vorrichtung nach einem der Ansprüche 9 bis 11, **dadurch gekennzeichnet, dass** das Körpersimulationselement Oberflächenstümpfen entsprechende Formabschnitte (7) aufweist, denen jeweils Aufnahmen für Simulationsgewichte (22) zugeordnet sind.

13. Vorrichtung nach einem der Ansprüche 9 bis 12, **gekennzeichnet durch** Mittel zur Voreinstellung eines Neigungswinkel einer den Torso eines Benutzers simulierenden Rückenelementes (10).

14. Vorrichtung nach einem der Ansprüche 9 bis 13, **dadurch gekennzeichnet, dass** die Neigung auf 25° ± 2° vorbestimmt ist.

15. Vorrichtung nach einem der Ansprüche 9 bis 14, **gekennzeichnet durch** einen zusätzlichen Roboter für eine Sitzverstellung.
